## Europäisches Patentamt

## European Patent Office

## Office européen des brevets

(19)

(11) Publication number: **0 032 352**

**B1**

(12)

# EUROPEAN PATENT SPECIFICATION

(45) Date of publication of patent specification: **20.08.86**

(51) Int. Cl.⁴: **F 16 L 11/08**

(21) Application number: **80630061.2**

(22) Date of filing: **17.12.80**

(54) Hose structure.

(30) Priority: **10.01.80 US 111070**

(43) Date of publication of application:
**22.07.81 Bulletin 81/29**

(45) Publication of the grant of the patent:
**20.08.86 Bulletin 86/34**

(84) Designated Contracting States:
**DE FR GB IT**

(56) References cited:
**DE-A-2 550 664**
**DE-A-2 633 801**
**DE-A-2 735 579**
**DE-B-2 062 418**
**GB-A-2 010 435**
**US-A-3 881 521**

(73) Proprietor: **THE GOODYEAR TIRE & RUBBER COMPANY**
**1144 East Market Street**
**Akron, Ohio 44316 (US)**

(72) Inventor: **Kluss, Karl K.**
**6230 Monticello Drive**
**Concord North Carolina 28025 (US)**
Inventor: **Allen, Terry F.**
**1295 Swigart Road**
**Barberton Ohio 44203 (US)**
Inventor: **Sawyer, John M.**
**791 Eaton Avenue**
**Cuyahoga Falls Ohio 44221 (US)**

(74) Representative: **Weyland, Joseph Jean Pierre**
**Goodyear International Tire Technical Center**
**Patent Department Avenue Gordon Smith**
**L-7750 Colmar-Berg (LU)**

Courier Press, Leamington Spa, England.

## Description

This invention relates to hoses for suction and discharge purposes, such as are used for the transport of petroleum products, water, sand and gravel slurries, dredge spoil and many other liquids and slurries. These hoses must withstand pressure operations as well as vacuum operations and be resistant to kinking when bent, but at the same time form a comparatively small bend radius. It is also desirable that such hoses be resistant to crushing and exhibit recovery to a round cross-section after having been crushed.

Present constructions are usually based on a lining or tube of rubber or of like material chosen according to the material to be transported over which is applied some form of reinforcement and an outer cover of rubber or like material chosen according to the service and environment intended for the hose. Such hoses can withstand either pressure or vacuum. The reinforcement against pressure is generally a cotton or synthetic yarn which may be either woven or in cord form; alternatively, wire cords can be used for this purpose. As another alternative high denier. monofilaments, in particular "MACROFIL" (Trade Mark) produced by Imperial Chemical Industries Ltd., have also been proposed — see British Patent Specification No. 1,293,200. The reinforcement against vacuum is usually a helix or helixes of a very heavy wire which, while resisting vacuum and external pressure, still permits the hose to flex. When such hoses are crushed they do not exhibit full recovery to a round cross-section since the helix or helixes of heavy wire takes a permanent set.

German Offenlegungsschrift DE—A—2735579 in the name of PNEUMATIQUES, CAOUTCHOUC MANUFACTURE ET PLASTIQUES KLEBERS-COLOMBES SA discloses a hose with reinforcement inserts which consists of at least two layers which are formed of wire, threads or cables which are wound helically and coaxially about the hose, the layers being separated from each other by a layer which has a substantial thickness and which is formed of a mixture based on elastomers or plastomers and which is hereinafter referred to as the intermediate layer, at least a part of the intermediate layer consisting of a mixture containing orientated fibers and said part being so arranged that its direction with the highest module forms a specific angle with the axis of the hose.

German Offlegungsschrift DE—A—2550664 in the name of SAMUEL MOORE & CO. discloses a hose for materials under pressure, especially hydraulic hose, with a hollow core, at least one reinforcement layer over the core, and an outer protective sleeve, the core and/or the protective sleeve consisting of an extruded elastomeric mass, the or each reinforcing layer, for the prevention of expansion of the core under material pressures or hydraulic fluid pressures greater than atmospheric, consisting of tensioned cords lying over one another and about the core at an angle between about 50° and about 65° with reference to the axis of the core, the core and/or the protective sleeve consisting of a thermoplastically extruded elastomeric mass cross-linked by irradiating with ionising electrons and having a basis of halogenated polyethylene, a co-polymerisate of Butadiene/Acrylonitrile, or a Butadiene/Acrylonitrile/Acrylic acid terpolymerisate.

According to the present invention, a suction and discharge hose, of the kind comprising:

(i) an inner tube of elastomer material, (ii) a cover layer of elastomer material spaced radially outwardly of said inner tube and forming an outer surface for the hose.

(iii) at least one reinforcing layer of elastomer material having embedded therein reinforcing cords extending in opposite hand helical patterns about the hose axis,

(iv) at least one filler layer disposed between said inner tube and said cover layer and being of elastomeric material having discontinuous elongated fibers embedded therein in substantially parallel relation and oriented so as to extend generally in a helical pattern about the hose axis, is characterised in that:

(a) the elastomeric material of the filler layer has a tensile modulus at 50 per cent elongation of about 400 pounds per square inch (28 Kg/cm$^2$) to about 800 pounds per square inch (56 Kg/cm$^2$) and a hardness from about 70 to about 85 Shore A, the thickness of the filler layer being from about one fifteenth to about one fifth of the means radius of the filler layer from the hose axis,

(b) from about 10 to about 18 per cent by weight of the fibers are embedded in randomly distributed manner and are oriented to extend generally in a helical pattern at an angle of at least 45° relative to the hose axis.

The hose may have at least two radially spaced reinforcing layers lying outwardly of said tube, each of said layers including at least one ply of elastomer-embedded reinforcing cords with the cords of each ply extending in a helical pattern about the hose axis at an angle from about 50 degrees to about 60 degrees relative to the hose axis, the cords of one ply extending in opposite-hand orientation relative to the cords of another ply.

The filler layer elastomer material may lie both radially inwardly and radially outwardly of at least some of the reinforcing cords. In a preferred embodiment, the filler layer elastomer material predominantly lies between the radially spaced reinforcing layers.

Preferably the filler layer elastomer material has a tensile modulus at 100 per cent elongation from about 700 pounds per square inch (49 Kg/cm$^2$) to about 1000 pounds per square inch (70 Kg/cm$^2$), and a tensile strength from about 700 pounds per square inch (49 Kg/cm$^2$) to about 1500 pounds per square inch (105 Kg/cm$^2$), and an elongation at rupture from about 100 to about 300 per cent.

Advantageously the filler layer elastomer material includes about 13 per cent by weight of fibers, e.g. short length cellulosic material treated to promote adhesion to the elastomer material into which they are incorporated.

Each reinforcing layer may include two piles of elastomer-embedded reinforcing cords. The fibers may extend at an angle of about 75° relative to the hose axis.

The filler layer is advantageously from about 30 to about 60 per cent of the thickness of the wall of said hose.

The invention will be further described with reference to the drawings accompanying the specification in which like numbers refer to like elements and suffix letters are used to distinguish between various embodiments. In the drawings:

Figure 1 is a section through part of the wall of a known type of hose;

Figures 2—6 are corresponding sections through part of the wall of various embodiments of hose according to the invention.

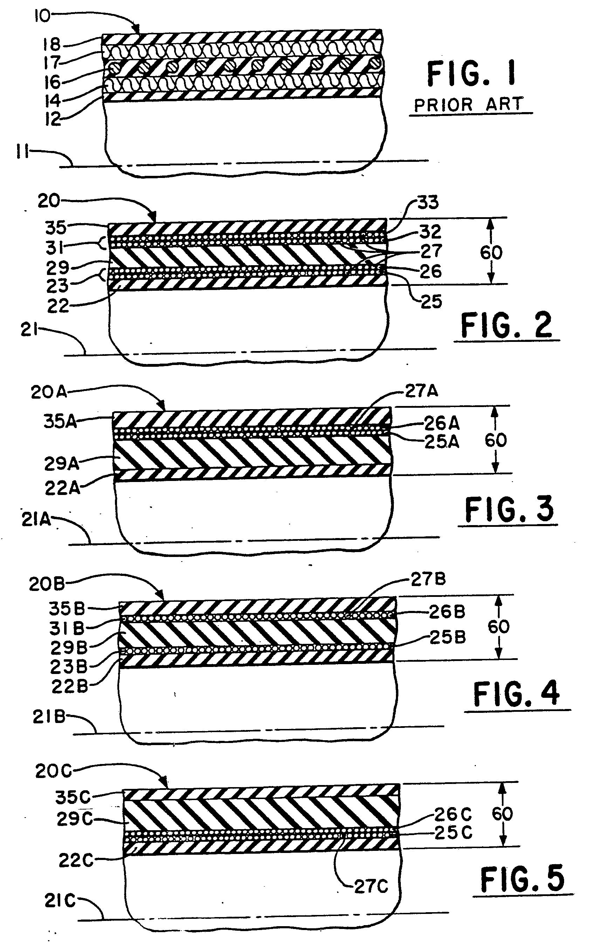

Figure 1 illustrates a hose 10 composed of an innermost rubber lining or tube 12, a pressure resistant reinforcement, and a rubber cover 18. The pressure resistant reinforcements 14, 17 may consist of fabric or natural textile materials, or a fabric made from synthetic textile materials, or of a layer of metallic wire filaments or cords. A heavy wire helix 16 is wound about the hose axis 11 over the reinforcement 14. Such a hose while resistant to pressure and to vacuum once crushed does not readily recover to a round cross-section due to permanent deformation of the heavy wire helix 16.

Figure 2 illustrates a section of hose wall according to a preferred embodiment of the invention. It consists successively from the inside to the outside thereof of an innermost lining or tube 22 made of natural or synthetic elastomeric material, a reinforcing layer 23 including two plies 25, 26 of elastomer embedded reinforcing cords, 27, the reinforcing cords 27 being applied with the major axis of the reinforcing cords at an angle of about 55° relative to the longitudinal axis 21 of the hose. The cords 27 of ply 25 extend in opposite hand orientation to the cords 27 of ply 26. Overlying the reinforcement layer 23 is a filler layer 29 of elastomeric material, the elastomeric material having a nominal tensile modulus at 50 per cent elongation of about 625 pounds per square inch (43.75 Kg/cm$^2$) when measured according to ASTM D412—75 and a hardness of about 85 Shore A. Overlying the filler layer 29 is a second reinforcing layer 31 which includes two plies 32 and 33 of elastomer embedded reinforcing cords 27. The cords 27 of ply 32 and 33 extend in a helical pattern about the hose axis 21 at an angle of about 55° relative to the hose axis. The cords 27 of ply 32 extend in a helical pattern in opposite hand direction relative to the cords 27 of ply 33. A cover layer 35 of elastomeric material envelops the foregoing described components and forms the outer surface of the hose 20.

Figure 3 illustrates a hose 20A similar to that shown in Figure 2 except that there are no plies of reinforcing cords radially inwardly of the filler layer 29A. Reinforcement of the hose 20A is accomplished by filler layer 29A over which are wound two plies 25A and 26A of elastomer embedded reinforcing cords 27A.

Figure 4 illustrates a hose 20B similar to that illustrated in Figure 2 with the exception that radially spaced reinforcing layers 23B and 31B each include only one ply 25B, 26B respectively of elastomer embedded reinforcing cords. The cords 27B of plies of 25B and 26B extend in opposite hand orientation relative to the longitudinal axis 21B of the hose 20B.

Figure 5 illustrates a section of hose 20C in which both cord reinforcing layers 25C, 26C lie radially inwardly of the filler layer 29C which is positioned adjacent the cover 35C of the hose.

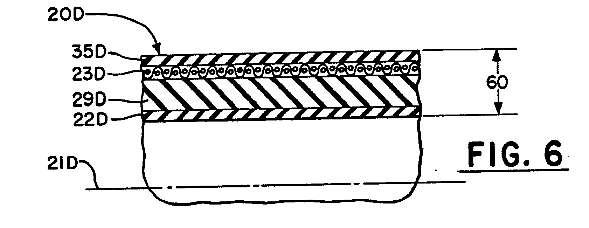

Figure 6 illustrates a section of hose 20D in which the elastomer embedded reinforcing cords are contained in a single reinforcing layer 23D. Reinforcing layer 23D includes reinforcing cords which extend in opposite hand helical patterns about the hose axis 21D. Reinforcing layer 23 may include a fabric whose warp and weft cords are of about the same magnitude of tensile strength. The filler layer 29D could alternately be placed radially outwardly of layer 23D or divided so as to be both radially inwardly and radially outwardly of layer 23D.

It is to be understood that the Figures are representative but not exhaustive of all hose structures within contemplation of the invention. For example, the plies 25, 26, 32, 33 of Figure 2 could each be radially spaced from one another and include between each filler layer elastomeric material like that illustrated as single layer 29. The filler layer in such an instance is considered to be the total of all its sublayers and its thickness is determined by measuring along a radius of the hose the total of the thickness of each of the sublayers. The radius of the filler layer when it includes sublayers is the arithmetic mean of the radius of each of the sublayers as measured from the hose axis.

The cord fabrics have been described to be applied at a cord angle of about 55° relative to the axis of the hose, but for specific purposes; for example, flexibility and kink resistance angles other than 55° may be used for some or all of the layers of reinforcing cords. The reinforcing cords will generally extend in a helical pattern about the hose axis at an angle from about 50° to about 60° relative to the hose axis.

The filler layer 29, 29A, 29B, 29C, 29D, whether a single layer or a plurality of sublayers, comprises a significant portion or percentage of the overall thickness 60 of the hose wall and is from about one fifteenth to about one fifth of the mean radius of the filler layer elastomeric material from the hose axis.

The filler layer elastomeric material preferably is from about 30 per cent to about 60 per cent of the thickness of the hose and most preferably from about 40 per cent to 50 per cent of the thickness of the hose. The filler layer is of high modulus elastomeric material. As used herein a high modulus elastomeric material is one which exhibits a tensile modulus at 50 per cent elongation of about 400 pounds per square inch (28, Kg/cm$^2$) to about 800 pounds per square inch (56 Kg/cm$^2$) when measured according to ASTM D412—75 and preferably, a tensile modulus at 100 per cent elongation of about 700 pounds per square inch (49 Kg/cm$^2$) to about 1000 pounds per square inch (70 Kg/cm$^2$) when measured according to ASTM D412—75.

The desired high modulus character of the filler layer elastomeric material is achieved by the addition of from about 10 per cent to about 18 per cent by weight of elastomer of short length elongate fibers during mixing of the elastomer. Mixing of the elastomer provides random distribution of the fibers. Subsequent calendering or extrusion operations result in the fibers assuming a substantially parallel relation to the lengthwise direction of the calendered or extruded material. The calendered or extruded material is wrapped about the hose axis so as to extend in a generally helical pattern about the hose axis at an angle of about 75° relative to the hose axis. The greater the angle relative to the hose axis of the fibers of the filler layer elastomeric material, the greater the amount of circumferential restriction of the hose to expansion or collapse.

A hose similar in construction to that illustrated in Figure 2 has been successfully constructed and evaluated. The filler layer 29 thickness was about 50 per cent of the thickness 60 of the hose, the filler layer exhibited a tensile modulus at 50 per cent elongation of about 625 pounds per square inch (43.75 Kg/cm$^2$) when evaluated according to ASTM D412—75 and at 100 per cent elongation a tensile modulus of about 871 pounds per square inch (60.97 Kg/cm$^2$) and an elongation at rupture of about 210 per cent. The filler layer elastomeric material was based on a blend of neoprene and nitrile elastomers and included about 13 per cent by weight of Santoweb (Trade Mark) K. Santoweb is a trade mark of Monsanto Corporation of St Louis, Missouri. Santoweb (Trade Mark) K is a short length unregenerated cellulosic fiber which has been treated to improve adhesion to the elastomeric material. These fibers have an elastic modulus of 2 to 5 × 10$^6$ psi (140,000 Kg/cm$^2$ to 350,000 Kg/cm$^2$) and a tensile strength of 6 to 9 × 10$^4$ psi (4200 Kg/cm$^2$ to 6300 Kg/cm$^2$) with an average diameter of 8 to 16 microns and a length of 1 to 3 millimeters, and a specific gravity of 1.17. Plies 25, 26 and 32, 33 were made of parallel cords 27 of five ply, 1300 denier, polyester terephthalate material which extend at an angle of about 55 degrees relative to the longitudinal axis 21 of the hose 20.

It is believed that other discontinuous fibrous material can be successfully employed to increase the modulus of the filler layer elastomeric material. The amount of loading required would, of course, be dependent upon the characteristics of the fibrous material and of the elastomeric material into which the fibers are to be incorporated. The physical properties and the thickness of the filler layer relative to the overall thickness 60 of the hose will, of course, be varied by one skilled in the art according to the particular requirements of the hose. For example, if less resistance to vacuum is contemplated, the modulus and hardness of the filler layer elastomeric material may be correspondingly lowered, the degree of fiber loading may be reduced, the type of fiber loading may be modified or the thickness of the filler layer relative to the overall thickness of the hose may be reduced. Considerations such as flexibility and kink resistance may also affect the material and proportion of the overall hose structure which is the filler layer and its position in the hose structure.

The composition of the inner tube of elastomeric material is not believed to be critical to functioning of the hose described. The man skilled in the art will realize that the inner tube elastomeric or plastic material is to be chosen on the basis of the material to be conveyed within the hose. Similarly the material to be used for the outer cover layer of the hose will not be described in detail herein as suitable compositions for hose covering will be known to the man skilled in the art and will be chosen according to the intended application of the hose. Plastics such as polyethylene and polyvinyl chloride have been used for hose tubes and covers. The plies of elastomer embedded reinforcing cords are preferably elastomer impregnated or embedded prior to assembly of the hose. The cords may be of textile or metallic wire material and by way of example but without limitation may include rayon, nylon, polyester, aramid, fiberglass and steel. Polymeric macrofilament material may be used.

The elastomeric materials of each layer used should of course be designed so as to be adherent to any other layer with which is it in contact on curing of the hose into an integral structure. Bridging or tying layers may be used to facilitate joining of two layers which otherwise may be incompatible.

One skilled in the art will readily appreciate that the thickness of the fiber loaded layer as a percentage of the total wall thickness of the hose may be reduced if higher modulus elastomeric material is employed.

In hose of general construction similar to Figure 2 it is preferred that each of the plies 25, 26, 32, 33 be of opposite hand orientation relative to any adjacent ply. However, it is only required that there be at least one ply whose cords extend in an opposite hand relation relative to the cords of the remainder of the plies. The cord plies 25B, 26B in the embodiment of the Figure 4 preferably extend in opposite hand relation relative to the hose axis 21B.

Opposite hand orientation as used herein means that the elements or cords referred to extend about the hose axis in spiral fashion at opposite sense helix angles relative to the axis of the hose.

## Claims

1. A suction and discharge hose, of the kind comprising

(i) an inner tube (22, 22a, 22b, 22c, 22d) of elastomer material,

(ii) a cover layer (20, 20a, 20b, 20c, 20d) of elastomer material spaced radially outwardly of said inner tube and forming an outer surface for the hose,

(iii) at least one reinforcing layer (23, 31, 25a, 26a, 23b, 31b, 25c, 26c, 23d) of elastomer material having embedded therein reinforcing cords extending in opposite hand helical patterns about the hose axis,

(iv) at least one filler layer (29, 29a, 29b, 29c 29d) disposed between said inner tube and said cover layer and being of elastomer material having discontinuous elongated fibers embedded therein in substantially parallel relation and oriented so as to extend generally in a helical pattern about the hose axis, characterised in that:

(a) the elastomer material of the filler layer has a tensile modulus at 50 per cent elongation of about 400 pounds per square inch (28 Kg/cm$^2$) to about 800 pounds per square inch (56 Kg/cm$^2$) and a hardness from about 70 to about 85 Shore A, the thickness of the filler layer being from about one fifteenth to about one fifth of the means radius of the filler layer from the hose axis,

(b) from about 10 to about 18 percent by weight of the fibers are embedded in randomly distributed manner and are oriented to extend generally in a helical pattern at an angle of at least 45° relative to the hose axis.

2. A suction and discharge hose, as claimed in claim 1, having at least two radially spaced reinforcing layers (23, 31, 23b, 31b) lying outwardly of said tube, each of said layers including at least on ply of elastomer-embedded reinforcing cords. with the cords of each ply extending in a helical pattern about the hose axis at an angle from about 50 degrees to about 60 degrees relative to the hose axis, the cords of one ply extending in opposite-hand orientation relative to the cords of another ply.

3. A suction and discharge hose, as claimed in claim 1 or claim 2, further characterised in that the filler layer elastomer material lies both radially inwardly and radially outwardly of at least some of the reinforcing cords.

4. A suction and discharge hose, as claimed in claim 2, further characterised in that the filler layer elastomer material predominantly lies between the radially spaced reinforcing layers.

5. A suction and discharge hose, as claimed in claim 1 or 2, further characterised in that the filler layer elastomer material has a tensile modulus at 100 per cent elongation from about 700 pounds per square inch (49 Kg/cm$^2$) to about 1000 pounds per square inch (70 Kg/cm$^2$).

6. A suction and discharge hose, as claimed in claim 1 or claim 2, further characterised in that the filler layer elastomer material has a tensile strength from about 700 pounds per square inch (49 Kg/cm$^2$) to about 1500 pounds per square inch (105 Kg/cm$^2$) and an elongation at rupture from about 100 to about 300 per cent.

7. A suction and discharge hose, as claimed in claim 1, further characterised in that the filler layer elastomer material includes about 13 per cent by weight of fibers.

8. A suction and discharge hose, as claimed in claim 1 further characterised in that the fibers are of short length cellulosic material treated to promote adhesion to the elastomer material into which they are incorporated.

9. A suction and discharge hose, as claimed in claim 1, further characterised in that each reinforcing layer includes two piles of elastomer-embedded reinforcing cords.

10. A suction and discharge hose, as claimed in claim 1, further characterised in that the fibers may extend at an angle of about 75° relative to the hose axis.

11. A suction and discharge hose, as claimed in claim 1, further characterised in that the filler layer is from about 30 to about 60 per cent of the thickness of the wall of said hose.

## Patentansprüche

1. Saug- und Ablaufschlauch, bestehend aus

(i) einem inneren Schlauch (22, 22a, 22b, 22c, 22d) aus elastomerem Material,

(ii) aus einer Deckschicht (20, 21a, 20b, 20c, 20d) aus elastomerem Material, die im Abstand radial außerhalb des inneren Schlauches angeordnet ist und die Außenfläche für den Schlauch bildet,

(iii) aus wenigstens einer Verstärkungsschicht (23, 31, 25a, 26a, 23b, 31b, 25c, 26c, 23d) aus elastomerem Material mit darin eingebetteten Verstärkungskorden, die sich in entgegengesetzt gerichteten schraubenförmigen Mustern um die Schlauchachse erstrecken, und

(iv) aus wenigstens einer Zwischenlage (29, 29a, 29b, 29c, 29d), die zwischen dem inneren Schlauch und der Deckschicht angeordnet ist und aus elastomerem Material mit diskontinuierlichen, gestreckten Fasern besteht, die darin im wesentlichen parallel eingebettet und derart ausgerichtet sind, daß sie sich im wesentlichen in einem schraubenförmigen Muster um die Schlauchachse erstrecken, dadurch gekennzeichnet, daß

(a) das elastomere Material der Zwischenschicht ein Zugelastizitätzmodul bei 50% Dehnung von etwa 400 pounds per square inch (28 kg/cm$^2$) bis etwa 800 pounds per square inch (56 kg/cm$^2$) und eine Härte von etwa 70 bis etwa 85 Shore A aufweist und die Stärke der Zwischenschicht etwa 1/15 bis etwa 1/5 des mittleren Radius der Zwischenschicht von der Schlauchachse beträgt, und daß

(b) etwa 10 bis 18 Gew.-% der Fasern zufällig verteilt eingebettet und derart orientiert sind, daß sie sich im wesentlichen in einem schraubenförmigen Muster unter einem Winkel von wenigstens 45° relativ zu der Schlauchachse erstrecken.

2. Saug- und Ablaufschlauch nach Anspruch 1, dadurch gekennzeichnet, daß wenigstens zwei radial beabstandete Verstärkungsschichten (23, 31, 23b, 31b) außerhalb des inneren Schlauches angeordnet sind, daß jede der Schichten wenigstens eine Lage aus elastomer eingebetteten Verstärkungskorden aufweist, daß die Korde jeder Schicht sich in einem schraubenförmigen Muster um die Schlauchachse unter einem Winkel von etwa 50 bis 60° zu der Schlauchachse erstrecken, und daß die Korde einer Schicht sich in entgegengesetzter Richtung zu den Korden der anderen Schicht erstrecken.

3. Saug- und Ablaufschlauch nach Anspruch 1 oder 2, dadurch gekennzeichnet, daß das elastomere Material der Zwischenschicht sowohl radial innerhalb als auch radial außerhalb wenigstens einiger der Verstärkungskorde liegt.

4. Saug- und Ablaufschlauch nach Anspruch 2, dadurch gekennzeichnet, daß das elastomere Material der Zwischenschicht vorwiegend zwischen den radial beabstandeten Verstärkungsschichten liegt.

5. Saug- und Ablaufschlauch nach Anspruch 1 oder 2, dadurch gekennzeichnet, daß das elastomere Material der Zwischenschicht ein Zugelastizitätsmodul bei 100% Dehnung von etwa 700 pounds per square inch (49 kg/cm$^2$) bis etwa 1000 pounds per square inch (70 kg/cm$^2$) beträgt.

6. Saug- und Ablaufschlauch nach Anspruch 1 oder 2, dadurch gekennzeichnet, daß der elastomere Material der Zwischenschicht eine Zugfestigkeit von etwa 700 pounds per square inch (49 kg/cm$^2$ bis etwa 1500 pounds per square inch (105 kg/cm$^2$) und eine Bruckdehnung von etwa 100 bis etwa 300% aufweist.

7. Saug- und Ablaufschlauch nach Anspruch 1, dadurch gekennzeichnet, daß das elastomere Material der Zwischenschicht etwa 13 Gew.-% Fasern aufweist.

8. Saug- und Ablaufschlauch nach Anspruch 1, dadurch gekennzeichnet, daß die Fasern aus zellulosem Material mit geringer Länge bestehen, die behandelt sind, um die Verbindung mit dem elastomeren Material, in welchem sie enthalten sind, zu verbessern.

9. Saug- und Ablaufschlauch nach Anspruch 1, dadurch gekennzeichnet, daß jede Verstärkungsschicht zwei Lagen aus Verstärkungskorden aufweist, die in dem elastomeren Material eingebettet sind.

10. Saug- und Ablaufschlauch nach Anspruch 1, dadurch gekennzeichnet, daß sich die Fasern unter einem Winkel von etwa 75° zu der Schlauchachse erstrecken.

11. Saug- und Ablaufschlauch nach Anpruch 1, dadurch gekennzeichnet, daß die Zwischenschicht etwa 30 bis 60% der Stärke der Schlauchwand aufweist.

## Revendications

1. Tuyau d'aspiration et de décharge du type comprenant:

(i) un tube intérieur (22, 22a, 22b, 22c, 22d) en une matière élastomère,

(ii) une couche de recouvrement (20, 20a, 20b, 20c, 20d) en une matière élastomère espacée radialement vers l'extérieur du tube intérieur et formant une surface extérieure pour le tuyau, (iii) au moins une couche de renforcement (23, 31, 25a, 26a, 23b, 31b, 25c, 26c, 23d) en une matière élastomère dans laquelle sont enrobés des câbles de renforcement s'étendant dans des configurations hélicoïdales de pas opposés autour de l'axe du tuyau,

(iv) au moins une couche de remplissage (29, 29a, 29b, 29c, 29d) disposée entre le tube intérieur et la couche de recouvrement, cette couche de remplissage étant constituée d'une matière élastomère dans laquelle sont enrobées des fibres allongées discontinues disposées dans une relation pratiquement parallèle et orientées de façon à s'étendre généralement en une configuration hélicoïdale autour de l'axe du tuyau, caractérisé en ce que:

(a) la matière élastomère de la couche de remplissage a, à un allongement de 50%, un module de traction d'environ 400 à environ 800 livres par pouce carré (28 à 56 kg/cm2) et une dureté Shore A d'environ 70 à environ 85, l'épaisseur de la couche de remplissage atteignant environ 1/15 à environ 1/5 du rayon moyen de la couche de remplissage, mesuré à partir de l'axe du tuyau,

(b) environ 10 à environ 18% en poids des fibres sont enrobées en étant réparties de manière aléatoire, tout en étant orientées pour s'étendre généralement dans une configuration hélicoïdale sous un angle d'au moins 45° par rapport à l'axe du tuyau.

2. Tuyau d'aspiration et de décharge selon la revendication 1, comportant au moins deux couches de renforcement espacées radialement (23, 31, 23b, 31b) s'étendant vers l'extérieur du tube précité, chacune de ces couches comprenant au moins une nappe de câbles de renforcement enrobés dans une matière élastomère, les câbles de chaque nappe s'étendant dans une configuration hélicoïdale autour de l'axe du tuyau sous un angle d'environ 50 à environ 60° par rapport à cet axe, les câbles d'une nappe s'étendant dans une orientation de pas opposé par rapport aux câbles d'une autre nappe.

3. Tuyau d'aspiration et de décharge selon la revendication 1 ou 2, caractérisé en ce que la matière élastomère de la couche de remplissage s'étend à la fois radialement vers l'intérieur et radialement vers l'extérieur d'au moins certains des câbles de renforcement.

4. Tuyau d'aspiration et de décharge selon la revendication 2, caractérisé en ce que la matière élastomère de la couche de remplissage s'étend principalement entre les couches de renforcement espacées radialement.

5. Tuyau d'aspiration et de décharge selon la revendication 1 ou 2, caractérisé en ce que la matière élastomère de la couche de remplissage a, à un allongement de 100%, un module de traction d'environ 700 à environ 1.000 livres par pouce carré (49 à 70 kg/cm2).

6. Tuyau d'aspiration et de décharge selon la revendication 1 ou 2, caractérisé en ce que la matière élastomère de la couche de remplissage a une résistance à la traction d'environ 700 à environ 1.500 livres par pouce carré (49 à 105 kg/cm2) et un allongement à la rupture d'environ 100 à environ 300%.

7. Tuyau d'aspiration et de décharge selon la revendication 1, caractérisé en ce que la matière élastomère de la couche de remplissage comprend environ 13% en poids de fibres.

8. Tuyau d'aspiration et de décharge selon la revendication 1, caractérisé en ce que les fibres sont des fibres de matière cellulosique de courte longueur traitées pour favoriser leur adhérence à la matière élastomère dans laquelle elles sont incorporées.

9. Tuyau d'aspiration et de décharge selon la revendication 1, caractérisé en ce que chaque couche de renforcement comprend deux nappes de câblés de renforcement enrobés dans une matière élastomère.

10. Tuyau d'aspiration et de décharge selon la revendication 1, caractérisé en ce que les fibres peuvent s'étendre sous un angle d'environ 75° par rapport à l'axe du tuyau.

11. Tuyau d'aspiration et de décharge selon la revendication 1, caractérisé en ce que la couche de remplissage constitue environ 30 à environ 60% de l'épaisseur de la paroi du tuyau.

0 032 352

FIG. 1
PRIOR ART

FIG. 2

FIG. 3

FIG. 4

FIG. 5

1

20D

35D
23D
29D
22D

21D

60

# FIG. 6